# EUROPEAN PATENT APPLICATION

(11) **EP 4 467 363 A1**
(43) Date of publication of application: **27.11.2024**
(21) Application number: 23174408.7
(22) Date of filing: 22.05.2023
(51) Int. Cl.: B60G 3/01

(54) **A MOBILE MINING MACHINE AND A SUSPENSION ARRANGEMENT FOR A MOBILE MINING MACHINE**

(71) Applicant: Sandvik Mining and Construction Oy, 33330 Tampere (FI)
(72) Inventor: Mikkola, Jussi, 33330 Tampere (FI); Kesäläinen, Riku, 33330 TAMPERE (FI)
(74) Representative: Sandvik

(57) **Abstract**

A suspension arrangement for a mobile mining machine, wherein the suspension arrangement (1) comprises a suspension actuator (8) and a hub motor arrangement (9), comprising a drive and a hub (7) for a wheel of the mobile mining machine. The suspension actuator (8) comprises a first part (81) and a second part (82) configured movable relative with each other at least in one direction, wherein the first part (81) of the suspension actuator is configured to be connectable on a frame (2) of the mobile mining machine and the second part (82) is connectable to the hub motor arrangement (9), wherein a wheel (3, 4) of the mining machine is connectable to the hub (7) of the hub motor arrangement (9).

## Description

### TECHNICAL FIELD

The embodiments disclosed herein relate to suspension arrangements of mobile mining machines, and mobile mining machines.

### BACKGROUND

Various embodiments of mobile mining machines and mining vehicles are known.

One type of a mobile mining machine is an articulated mining machine. The articulated mining machine may comprise two sections connected by a joint. In some embodiments of the articulated mining machine, a mechanical linkage, i.e. joint, connects a first frame portion and a second frame portion so that the two portions of the frame can move relative to one another (e.g., swivel or pivot).

Some electric mining vehicles may include an electric motor, a primary battery assembly comprising a battery pack used to power the electric motor, where the primary battery assembly can be mounted and dismounted from the electric vehicle. The vehicle may also include a mounting and dismounting arrangement capable of mounting and dismounting the primary battery assembly from the electric vehicle. This mounting and dismounting of a primary battery assembly may be called also as a battery exchange or a battery swap.

### SUMMARY

According to first aspect, there is provided a suspension arrangement for a mobile mining machine.

According to an embodiment the suspension arrangement comprises a suspension actuator and a hub motor arrangement, comprising a drive and a hub for a wheel of the mobile mining machine, wherein the suspension actuator comprises a first part and a second part configured movable relative with each other at least in one direction, wherein the first part of the suspension actuator is configured to be connectable on a frame of the mobile mining machine and the second part is configured connectable to the hub motor arrangement, wherein a wheel of the mining machine is connectable to the hub of the hub motor arrangement.

According to a second aspect there is provided a mobile mining machine. According to an embodiment the mobile mining machine comprises a suspension arrangement for a mobile mining machine according to one or more embodiments mentioned above or below alone or a combination of one or more embodiments mentioned above or below.

An advantage of the one or more embodiments utilizing a suspension arrangement comprising a suspension actuator and a hub motor arrangement is that they may enable to provide an effective, reliable, and agile moving arrangement for a mobile mining machine. An advantage of one or more embodiments is that no sub frame, i.e. an oscillation cradle, is needed as in prior mining machines such as with dumpers, for a suspension of axles and/or their oscillation. This may release more space inside a centre frame and facilitate a better placement of components from a point of view of good installation and maintenance practises.

The method and the arrangement and the mobile mining machine are characterized by what is stated in the independent claims.

Some other embodiments are characterized by what is stated in the other claims. Example embodiments are also disclosed in the specification and drawings of this patent application. Features of the different embodiments may, within the scope of the basic inventive idea, be applied to other embodiments.

In an embodiment of the suspension arrangement the hub motor arrangement may comprise a receiving part for an end of the second part of the suspension actuator. One of the advantages of this example embodiment is that the receiving part may enable an easy mounting of the suspension actuator. In addition it enables turning the hub motor arrangement in relation to suspension actuator.

In an embodiment of the suspension arrangement the hub motor arrangement the suspension arrangement may comprise a connecting part configured for connection the suspension actuator to the frame of the mobile mining machine. One of the advantages of this example embodiment is the reliable connection of the suspension actuator to the frame of the mobile mining machine may be achieved by the connecting part. In an embodiment connecting part may be arranged to extend parallel with the suspension actuator.

In an embodiment of the suspension arrangement the suspension arrangement may comprise a connecting portion for connecting a connecting part to the first part of the suspension actuator. One of the advantages of this example embodiment is that by using a combination of the connecting part and the connecting portion a reliable connection may be achieved also for heavy duty vehicles.

In an embodiment of the suspension arrangement the suspension actuator may be configured to adjust a relative distance between the hub of the hub motor arrangement and the frame. One of the advantages of this example embodiment is that it enables adjusting a relative height between a ground and frame of the mobile mining machine. It may enable an individual height adjusting of each wheel provided with the suspension arrangement. It enables kneeling of a mobile mining machine. This may help in battery swapping of a battery operated mobile mining machine. By kneeling of the mobile mining machine may help a mounting and dismounting device to release and/or attach the battery. A further advantage may be that by setting an adjustable suspension actuator of the suspension arrangement of the mining machine from an extended state to a retracted state and/or from a retracted state to an extended state an efficient and a reliable way of moving, i.e. elevating or lowering, the frame may be achieved.

In an embodiment of the suspension arrangement the hub motor arrangement is configured turnable, i.e. rotatable, in relation to the suspension actuator. One of the advantages of this example embodiment is that this enables a steering of each wheel provided with the suspension arrangement. In an embodiment the hub motor arrangement may be rotatable in relation to length axis of the suspension actuator. In an embodiment the length axis of the suspension actuator may be in a cross direction in relation to the hub axle, i.e the wheel axle.

In an embodiment of the suspension arrangement the suspension actuator may be an operating element which uses mechanical power and/or electrical power and/or hydraulic power and/or pneumatic power or a combination of two or more of these. One of the advantages of this example embodiment is that the suspension actuator may be an adjustable operating element which enables an easy operation and control.

In an embodiment of the suspension arrangement the suspension arrangement may comprise a suspension actuator configured to vary stiffness of the suspension. One of the advantages of this example embodiment is that features of the suspension arrangement may be adapted according to the operation environment and situation.

In an embodiment of the suspension arrangement the suspension arrangement comprises a suspension actuator may be configured to be locked to a certain operational position or to certain operational positions. One of the advantages of this example embodiment locking of the suspension actuator to a certain operational position may be beneficial in some situations in sense of stability.

In an embodiment of the suspension arrangement the suspension actuator may be configured to be connected on a side of a frame. One of the advantages of this example embodiment may be that the construction of the frame and suspension arrangement may be kept simple. This may give space for installation of components in an assembly and helps maintenance and service operations of the mobile mining machine.

In an embodiment of a mobile mining machine may comprise any one of the embodiments of a suspension arrangement for a mobile mining machine mentioned above or below or a combination of two or more of said embodiments. One of the advantages of this example embodiment for utilizing a suspension arrangement for a mobile mining machine is that the mobile mining machine is easy to handle, its suspension is adaptive to different operational situations. A height and stiffness may be adjusted according to needs. Assembly of the mining machine is easy as there is more space in the centre frame. This may help in installation of components during the assembly, maintenance, and service operations of the mobile mining machine.

In an embodiment of a mobile mining machine the suspension arrangement may be arranged for front wheels of the mining machine. One of the advantages of this example embodiment is that by arranging suspension arrangement to front wheels of the mobile mining machine a front end of the machine may be lowered, i.e. set to a kneeling position, and elevated. In addition front wheels may be arranged turnable, i.e. steered, so that the handling of the mining machine may be more efficient, especially in case of articulated steered mobile mining machines, such as dumpers.

In an embodiment of a mobile mining machine the suspension arrangement may be arranged for rear wheels of the mining machine. One of the advantages of this example embodiment is that by arranging suspension arrangement to rear wheels of the mobile mining machine a rear end of the machine may be lowered, i.e. set to a kneeling position, and elevated. In addition rear wheels may be arranged turnable, i.e. steered, so that the handling of the mining machine may be more efficient, especially in case of articulated steered mobile mining machines, such as loaders.

In an embodiment of a mobile mining machine an adjustment of relative height h between the frame of the mobile mining machine and the ground may be achieved by the suspension arrangement. In an embodiment of the mobile mining machine may optionally be configured for enabling at least one of the following options: kneeling the mobile mining machine; helping in mounting/dismounting a battery; adjusting individually height of each wheel provided with the suspension arrangement; or any combination of two or more of these options. One of the advantages may be that adjustable suspension may make service of the mining machine easier when the adjustable suspension is adjusted to a minimum value and/or to a maximum value. With help of the adjustable height suspension it may be possible to increase the ground clearance of the mobile mining machine, for example, for driving over an obstacle, or for driving along a path having varying elevation angles. It may also be possible to prevent a front overhang and/or a rear overhang of the frame of the mobile mining machine to contact support surface S, for example ground, near a transition point of the varying elevation angle on a path. This may be an important factor in mines, especially in underground mines. In an embodiment of a mobile mining machine front wheels and/or rear wheels may be steerable in the articulated steerable mining machine. One of the advantages of this example embodiment is that the handling of the mining machine may be more efficient, especially in case of articulated steered mobile mining machines. This may be an important factor in a mine environment in which tunnels may be narrow and curves rather tight. Easy of handling may help to keep payloads of the mobile mining machines at maximum level.

### BRIEF DESCRIPTION OF THE DRAWINGS

The accompanying drawings, which are included to provide a further understanding of the invention and embodiments constitute a part of this specification, illustrate example embodiments of the invention and together with the description help to explain the principles of the invention set out in the claims. In the drawings:
**Figure 1** is a schematic perspective view of an embodiment of a mobile mining machine,
**Figure 2** is a schematic perspective view of a second embodiment of a mobile mining machine,
**Figure 3** is a schematic perspective view of a front part of a frame of a mobile mining machine, and an embodiment of a suspension arrangement with an embodiment of a hub motor arrangement,
**Figure 4** is a schematic perspective view of a front part of a frame of a mobile mining machine, and an embodiment of a suspension arrangement with an embodiment of a hub motor arrangement,
**Figure 5** is a schematic perspective view of a rear part of a frame of a mobile mining machine, and an embodiment of a suspension arrangement with an embodiment of a hub motor arrangement, and
**Figure 6** is a schematic perspective view of a rear part of a frame of a mobile mining machine, and an embodiment of a suspension arrangement with an embodiment of a hub motor arrangement.

In the figures, some embodiments are shown simplified for the sake of clarity. Similar parts are marked with the same reference numbers in the figures.

### DETAILED DESCRIPTION

According to an example embodiment an arrangement described in this description may be arranged in a mobile mining machine 100 that may be at least partially electrically powered by one or more batteries onboard of the machine. The mobile mining machine may be a mine machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicle of gallery arcs or nets, a concrete spraying machine, a crusher, or a measuring vehicle. The mobile mining machine 100 may be an underground mining machine.

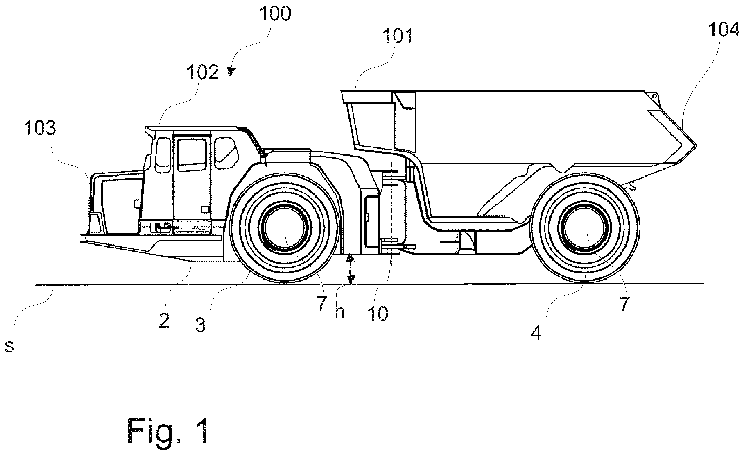

Figure 1 shows one example of a mobile mining machine 100. The mobile mining machine may be a mining vehicle. In an embodiment the mobile mining machine 100 may be equipped with a dumb bed 101. The drive equipment may comprise one or more drive motors and one or more power transmission means for transmitting drive power to one or more wheels 3, 4. The drive power transmission may comprise a mechanical gear system and mechanical power transmission members or, alternatively, the drive power transmission may be hydraulic or electric. In an embodiment the drive motor may be a hub motor. In an embodiment a powertrain of the mobile mining machine may comprise a hub motor arrangement. In some embodiments, the vehicle may include four electric motors, where each electric motor independently powers one of the four wheels.

The mobile mining machine 100 of the Figure 1 has four wheels 3, 4. The number of wheels may vary and instead of wheels, there may be different kind of mechanism for moving, for example a track arrangement. In an embodiment the mobile mining machine may comprise a frame 2.

The mining machine 100 may be comprised of a frame 2 (or chassis), a set of wheels 3, 4 and optionally a bed 101. The bed 101 may be coupled with the frame 2 and may be tilted between a lowered position and raised position.

For reference, the mining machine 100 is also characterized as having a front end 103, a rearward end 104, a first side and a second side.

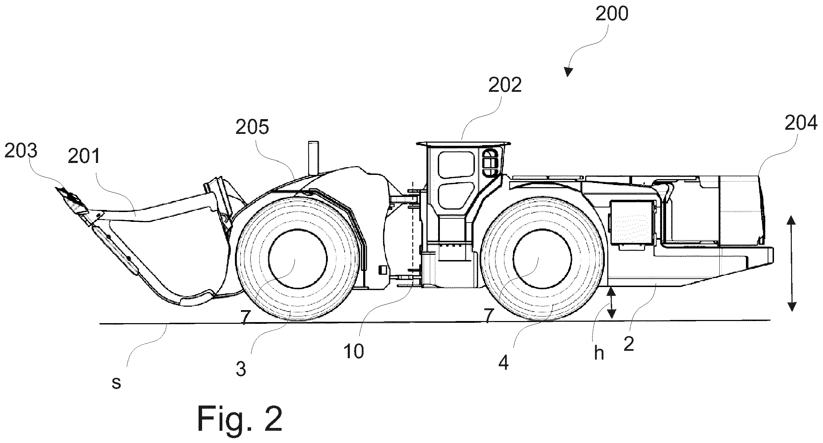

In an embodiment of figure 2 the mining machine 200 may be a work machine equipped with a boom 205 and a bucket 201 connected to the boom 205. The boom 205 may be coupled with the frame 2 and may be tilted between a lowered position and raised position. The mining machine 200 may be a loader. The mining machine may comprise one or more booms 205 and a bucket 201 attached in a pivotable or otherwise movable manner to the one or more booms 205. For example, the bucket 201 may be coupled to two booms 205. The mining machine may be an articulated vehicle comprising two sections connected by a joint 10. The work machine may be a load and haul (LHD) device, or a device mainly intended for loading. The mobile mining machine may be a mining vehicle. The drive equipment may comprise one or more drive motors and one or more power transmission means for transmitting drive power to one or more wheels 3, 4. The drive power transmission may comprise a mechanical gear system and mechanical power transmission members or, alternatively, the drive power transmission may be hydraulic or electric. In an embodiment the drive motor may be a hub motor. In an embodiment a powertrain of the mobile mining machine may comprise a hub motor arrangement. In some embodiments, the vehicle may include four electric motors, where each electric motor independently powers one of the four wheels.

The mining machine 100, 200 may be an electrically powered machine. In an embodiment the mining machine may comprise a battery assembly that may be simply called as a battery. In an embodiment of the mining machine the battery may be an exchangeable battery.

In an embodiment the mobile mining machine may comprise a frame 2. In an embodiment a front part of the mobile mining machine and a rear part of the mobile mining machine may be arranged to turn in relation to each other and in relation to a vertical axis by a joint 10.

In an embodiment a suspension arrangement 1 may be arranged between a wheel 3, 4 and a frame 2 of the mobile mining machine. In an embodiment of the suspension arrangement 1 may be arranged a suspension actuator 8. The suspension actuator 8 may be an operating element which may use mechanical power and/or electrical power and/or hydraulic power and/or pneumatic power or a combination of two or more of these.

The mining machine 100 may include an electric motor, a primary battery assembly comprising a battery pack used to power the electric motor, where the primary battery assembly, i.e. the battery, may be mounted and dismounted from the mining machine. In an embodiment the mining machine may also include a mounting and dismounting arrangement capable of mounting and dismounting the primary battery assembly from the mining machine.

The mining machine 100 may also be provided with various standard vehicular provisions, such as a cab 102 for receiving one or more operators. In an embodiment the mining machine may be without a cab, for example, if the mining machine is an autonomous mining machine or a remote-controlled mining machine.

In some embodiments, the frame 2 of the mining machine 100 may be divided into a first frame portion and a second frame portion. The first frame portion may be a front portion, optionally associated with a cab 102. The second frame portion may be a rearward portion, optionally associated with a bed 101. In an embodiment of figure 2 the first frame portion may be optionally associated with a boom 205 and a bucket 201. In an embodiment the second frame portion may be optionally associated with a cab 202. In some embodiments, a mechanical linkage, i.e. joint 10, connects the first frame portion and the second frame portion so that the two portions of the frame can move relative to one another (e.g., swivel or pivot). This kind of machines are often called as articulated machines.

The mobile mining machine 100, 200 has a frame 2 that may be supported by the wheels 3, 4. In an embodiment the frame 2 may be arranged to be supported by a suspension arrangement 1. The suspension arrangement 1 may comprise a suspension actuator 8 and a hub motor arrangement 9, comprising a hub 7 for a wheel of the mobile mining machine, wherein the suspension actuator 8 comprises a first part 81 and a second part 82 configured movable relative with each other at least in one direction, wherein the first part 81 of the suspension actuator is configured to be connectable on a frame 2 of the mobile mining machine and the second part 82 is configured connectable to the hub motor arrangement 9, wherein a wheel 3, 4 of the mining machine is connectable to a hub of the hub motor arrangement.

In an embodiment the suspension arrangement 1 may be an adjustable suspension arrangement. In an embodiment the adjustable suspension arrangement 1 may be a height adjustable suspension arrangement. The height adjustable suspension arrangement 1 may comprise a suspension actuator 8 for adjusting a relative distance between the frame 2 and the wheel 3. In an embodiment a first part 81 of the suspension actuator 8 may be connected to the frame 2. In an embodiment a second part 82 of the suspension actuator may be arranged to a support of a wheel. In an embodiment the second part 82 of the suspension actuator 8 may be arranged to a hub motor arrangement 9. In an embodiment the wheel may be connected to a hub motor arrangement by a connecting part of a hub 7. In an embodiment a hub 7 for the wheel 3 may be a part of a hub motor arrangement 9. The support structure of the hub 7 of the wheel 3 and the frame 2 may be arranged to move relative each other. In an embodiment the suspension actuator 8 may be arranged between the frame 2 and the hub motor arrangement 9. In an embodiment a first end 81 of the suspension actuator 8 is connected on the frame 2 and the second end 82 of the actuator is connected on the hub motor arrangement 9. By controlling the suspension actuator 8 it may be possible to adjust distance between the frame 2 and the hub 7 (and the wheel 3). As the wheel 3 is supported on a surface S, it may be possible to control a distance h between the frame 2 of the mining machine and a surface S. In an embodiment the suspension actuator 8 may be a cylinder-piston-type actuator actuated by pressure medium. In an embodiment the suspension actuator 8 may be a hydraulic actuator. In an embodiment the suspension actuator 8 may be a pressure-gas actuator. In an embodiment the suspension actuator 8 may be a hydropneumatic actuator. When the suspension actuator 8 is in a retracted position a distance between the frame 2 and the hub 7 of the wheel 3 is adjusted to a minimum value.

In one example embodiment the distance h may be a ground clearance of the mobile mining machine. In one example embodiment with help of the adjustable height suspension it may be possible to decrease the ground clearance, for example, for lowering at least one end of the machine to a kneeling position. In one example embodiment when the suspension actuator 8 is in the retracted state the mobile mining machine 100, 200 may be in a kneeling position. A distance h between the support surface S, i.e. ground, and the frame 2 of the mining machine is low, i.e. in a minimum value, when the mobile mining machine is in a kneeling position. In one example embodiment distance h may be about 0 to 150 mm, when the distance is in a minimum value. In an embodiment the battery attached to the mining machine 100, 200 may be laid down on the surface S when the distance of the frame 2 and the surface S is at the minimum level i.e. when the mining machine is kneeling. It may also make service of the mining machine easier when the adjustable suspension is adjusted to a minimum value and/or to a maximum value.

When the suspension actuator 8 is in an extended state the distance between the frame 2 and the hub 7 is adjusted to a maximum value. Then the distance h between the support surface S, i.e. ground, and the frame of the mining machine may be high. In one example embodiment distance h may be at least 150 mm when the distance is in a maximum value. In one example embodiment the distance h may be a ground clearance of the mobile mining machine. In one example embodiment with help of the adjustable height suspension it may be possible to increase the ground clearance, for example, for driving over an obstacle, or for driving along a path having varying elevation angles. In one example embodiment by adjusting the adjustable suspension it may be possible to prevent a front overhang and/or a rear overhang of the frame of the mobile mining machine to contact support surface S, for example ground, near a transition point of the varying elevation angle on a path of the mobile mining machine. A normal drive position of the mining machine provided with the adjustable height suspension may be between the retracted state and the extended state of the actuator 8. In an embodiment the actuator may be of a cylinder-piston type actuator driven by a pressure medium. In an embodiment the actuator may be driven by a pressure medium conducted to the cylinder piston actuator via conducts, i.e. pressure lines. A piston of the cylinder piston type actuator may be driven by conducting the pressure medium to a cylinder space to one side of the piston, which is arranged movably in the cylinder space. Pressure medium from the other side of the cylinder may be conducted to a tank. By changing the side of the cylinder space of the suspension actuator 8 in which the pressure medium is conducted via valves and lines the suspension actuator 8 may be set to a retracted state or to an extended state. In other embodiments other types of actuators may be used. The pressure medium may be fluid, for example hydraulic fluid, gas, or pressure air. In an embodiment the suspension actuator may be provided with a biasing member, such as with a spring member. In an embodiment the height adjustable suspension may be arranged with a hub motor arrangement 9. This enables an effective combination for a mining machine suspension and propulsion. The combination enables individual control of the suspension of each wheel of the mining machine. Moreover, the combination enables individual control of traction of each wheel provided with a hub motor arrangement. In an embodiment the suspension arrangement may enable steering of wheels. In an embodiment each pair of wheels may be connected with each other by a tie bar and/or with a steering device. In an embodiment of a hub motor arrangement may be provided with a connecting part 87 for connecting each pair of wheels with a tie bar.

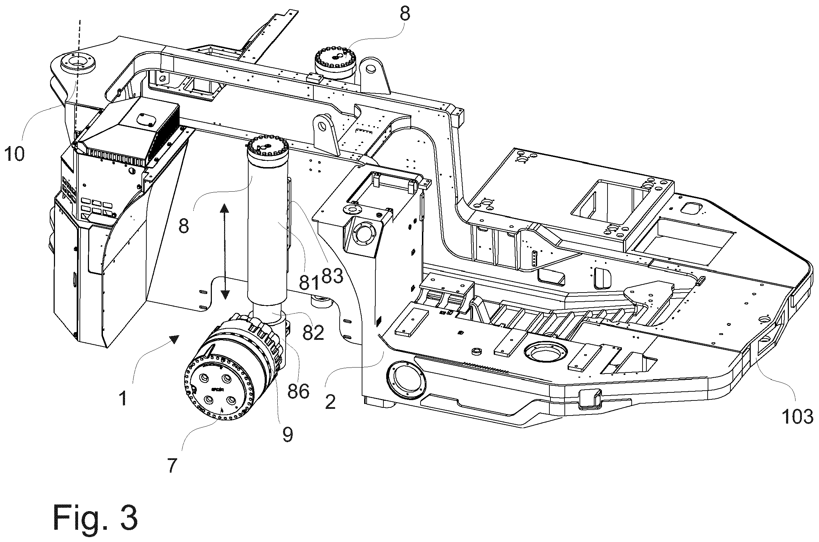

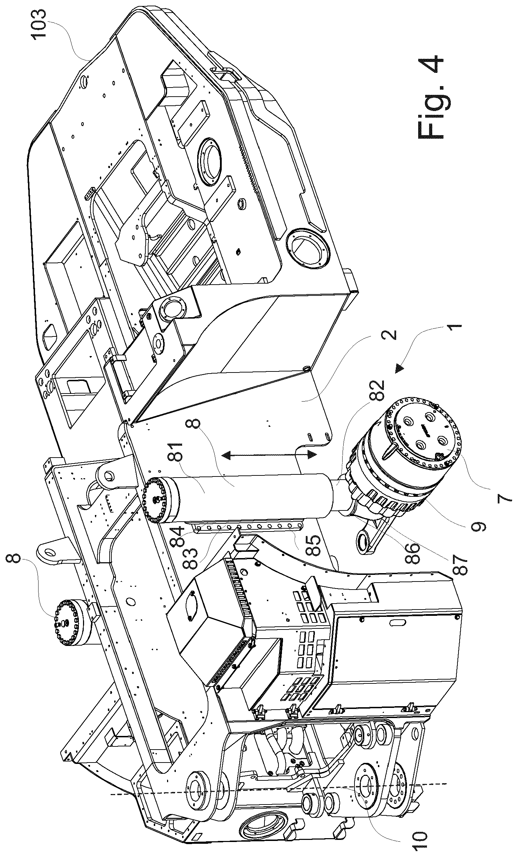

The suspension actuator 8 may be connected with a frame 2 by a connecting part 83. In an embodiment the connecting part may be connected to the frame 2 by fixing parts 85, such as bolts. In an embodiment the connecting part 83 may be connected to the frame 2 by welding. In an embodiment a connecting portion 84 may be arranged on the first part 81 of the suspension actuator 8. In an embodiment the connecting portion 84 may be a portion of the connecting part 83. In an embodiment the connection portion 84 may be connected to the first part 81 of the suspension actuator 8 by fixing device and/or by welding. In an embodiment the connecting part 83 may be connected directly to the first part 81 of the suspension actuator 8. In an embodiment the connecting part 83 may be connected to the first part 81 of the suspension by fixing device and/or by welding. In an embodiment of figures 3 and 4 the suspension actuator 8 connected to a plate part of the frame 2. In an embodiment the suspension actuator is connected on a vertical plate part of the frame 2. In an embodiment an actuating direction of the adjustable suspension is shown by arrow in the figures.

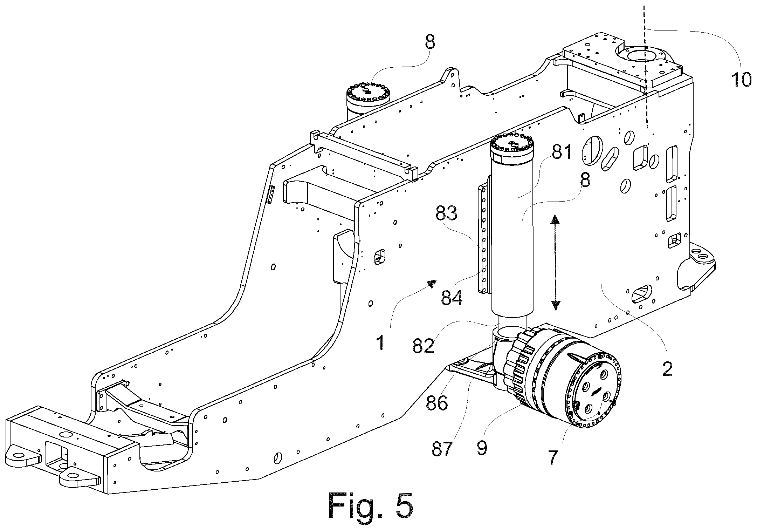

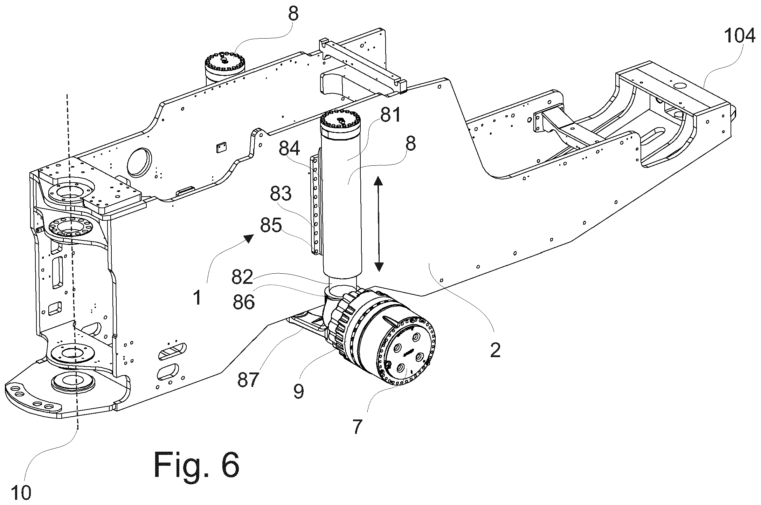

In the figures 5 and 6 is shown an embodiment of the suspension arrangement 1 in a rear frame part of the frame 2 of a mining machine. In an embodiment the mining machine 200 may be a loader as shown in figure 2. The suspension actuator 8 may be connected with a frame 2 by a connecting part 83. In an embodiment the connecting part may be connected to the frame 2 by fixing parts 85, such as bolts. In an embodiment the connecting part 83 may be connected to the frame 2 by welding. In an embodiment a connecting portion 84 may be arranged on the first part 81 of the suspension actuator 8. In an embodiment the connecting portion 84 may be connected to the connecting part 83 or may be a portion of the connecting part 83. In an embodiment the connecting portion 84 may be connected to the first part 81 of the suspension actuator by fixing device and/or by welding. In an embodiment the connecting part 83 may be connected directly to the first part 81 of the suspension actuator 8. In an embodiment the connecting part 83 may be connected to the first part 81 of the suspension actuator 8 by fixing device and/or by welding. In an embodiment of figures 3 and 4 the suspension actuator 8 is connected to a plate part of the frame 2. In an embodiment the suspension actuator 8 may be connected on a vertical plate part of the frame 2. In an embodiment an actuating direction of the adjustable suspension is shown by arrow h in the figures.

The mining machine 100 may also include a propulsion system comprising one or more electric motors that are powered by one or more batteries. In some embodiments, the mining machine may include at least two electric motors for powering each pair of wheels. In some embodiments, the mining machine may include four electric motors, where each motor independently powers one of four wheels. In an embodiment, the mining machine may include a first electric motor, a second electric motor, a third electric motor and a fourth electric motor, referred to collectively as a set of motors.

In an embodiment of the hub motor arrangement a drive may be an electric drive and may include an electric motor at least partially, if not entirely, positioned within the hub motor arrangement. In an embodiment the electric drive of the hub motor arrangement may be powered by, or part of, the power train and receives power from the prime power source of the mobile mining machine. In an embodiment, the prime power source may be a battery or batteries. The electrical power may be stored in the one or more batteries. In an embodiment, the prime power source may be an engine, which provides mechanical power that is converted to electrical power through the power conversion components and the one or more batteries of the power train. In the claims term powertrain may comprise hub motors e.g., an electric motor, possible gear, a hub wheel i.e., a hub. There may be also other components in the powertrain that may not be placed in the power train support arrangement but placed in other location of the mobile mining machine.

In an embodiment the height adjustable suspension may be utilized for kneeling the mining machine.

Embodiments can incorporate one or more batteries to power set of motors and/or an auxiliary motor. As used herein, the term "battery" may refer to a primary battery assembly or a battery pack and generally refers to multiple battery modules in a heavy-duty pack housing, such as a battery cage. Each battery module may be comprised of multiple battery cells. In this way, a battery may also refer to a collection of individual battery cells. The battery cells, and therefore modules, may be functionally interconnected together.

In different embodiments, a battery or a battery pack could incorporate any suitable kind of battery cell. Examples of battery cells include capacitors, ultra-capacitors, and electrochemical cells. Examples of electrochemical cells include primary (e.g., single use) and secondary (e.g., rechargeable). Examples of secondary electrochemical cells include lead-acid, valve regulated lead-acid (VRLA), gel, absorbed glass mat (AGM), nickel-cadmium (NiCd), nickel-zinc (NiZn), nickel metal hydride (NiMH), lithium-ion (Li-ion), and the like. A battery cell may have various voltage levels. In particular, in some cases two different battery cells in a battery pack could have different voltage levels. Similarly, the battery cell may have various energy capacity levels. In particular, in some cases, two different battery cells in a battery pack could have different capacity levels.

In some cases, it may be desirable to use multiple battery packs. As used herein, the term "battery assembly" may refer to a set of one or more battery packs. In some embodiments, a battery assembly may also include a cage or similar container for holding the separate battery packs together.

In an embodiment of the mining machine a use of a height adjustable suspension (kneeling system) may help the battery mounting/unmounting arrangement with lift system in a mining machine, such as a dump truck, loader etc. With the adjustable suspension system, the front end and/or the rear end of the mining machine can be lowered so that it is possible to do a battery swap (i.e. mounting/unmounting of a battery). This may also make a service of the mobile mining machine easier. In addition to the kneeling system, especially if the movement range of the adjustable suspension is not enough for the battery mounting/unmounting, then also use some lift system additional to suspension movement. In this case the lift system can be significantly smaller/with a shorter range of motion, than without the suspension system.

It is obvious to a person skilled in the art that with the advancement of technology, the basic idea of the invention may be implemented in various ways. The invention and its embodiments are thus not limited to the examples described above, instead they may vary within the scope of the claims.

### Reference signs:

- 1: Suspension arrangement
- 2: Frame/chassis
- 3: First wheel/front wheel
- 4: Second wheel/rear wheel
- 5: Pivot
- 6: Support structure
- 7: Hub
- 8: Suspension actuator
- 9: Hub motor
- 10: Joint
- 81: First part of the actuator
- 82: Second part of the actuator
- 83: Connecting part
- 84: Connection portion
- 85: Fixing part
- 86: Receiving part
- 87: Connecting part
- 100: Mining machine
- 101: Dumb bed
- 102: Cab
- 103: Front end
- 104: Rear end
- 200: Mining machine
- 201: Bucket
- 202: Cab
- 203: Front end
- 204: Rear end
- 205: Boom
- S: Support surface/ground

## Claims

1. A suspension arrangement for a mobile mining machine, wherein the suspension arrangement (1) comprises a suspension actuator (8) and a hub motor arrangement (9), comprising a drive and a hub (7) for a wheel of the mobile mining machine, wherein the suspension actuator (8) comprises a first part (81) and a second part (82) configured movable relative with each other at least in one direction, wherein the first part (81) of the suspension actuator is configured to be connectable on a frame (2) of the mobile mining machine and the second part (82) is connectable to the hub motor arrangement (9), wherein a wheel (3, 4) of the mining machine is connectable to the hub (7) of the hub motor arrangement (9).

2. The suspension arrangement according to claim 1, wherein the hub motor arrangement (9) comprises a receiving part (86) for an end of the second part (82) of the suspension actuator.

3. The suspension arrangement according to claim 1 or 2, wherein the suspension arrangement (1) comprises a connecting part (83) configured for connecting the suspension actuator (8) to the frame (2) of the mobile mining machine.

4. The suspension arrangement according to any one of claims 1 to 3, wherein the suspension arrangement (1) comprises a connecting portion (84) for connecting a connecting part (83) to the first part (81) of the suspension actuator (8).

5. The suspension arrangement according to any one of claims 1 to 4, wherein the suspension actuator (8) is configured to adjust a relative distance between the hub (7) of the hub motor arrangement (9) and the frame (2).

6. The suspension arrangement according to any one of claims 1 to 5, wherein the hub motor arrangement (9) is turnable in relation to the suspension actuator (8) .

7. The suspension arrangement according to any one of claims 1 to 6, wherein the suspension actuator (8) is an operating element which is configured to use mechanical power and/or electrical power and/or hydraulic power and/or pneumatic power or a combination of two or more of these.

8. The suspension arrangement according to any one of claims 1 to 7, wherein the suspension arrangement (1) comprises a suspension actuator (8) configured to vary stiffness of the suspension.

9. The suspension arrangement according to any one of claims 1 to 8, wherein the suspension arrangement (1) comprises a suspension actuator (8) configured to be locked to a certain operational position or to certain operational positions.

10. The suspension arrangement according to any one of claims 1 to 9, wherein the suspension actuator (8) is connected to a side of a frame (2).

11. A mobile mining machine comprising a suspension arrangement (1) for a mobile mining machine (100, 200) according to any one of claims 1 to 10.

12. The mobile mining machine (100, 200) according to claim 11, wherein the suspension arrangement (1) is connected to front wheels (3) of the mobile mining machine (100, 200).

13. The mobile mining machine according to claim 11 or claim 12, wherein the suspension arrangement (1) is connected to rear wheels (3) of the mobile mining machine (100, 200).

14. The mobile mining machine according to any one of claims 11 to 13, wherein the mobile mining machine (100, 200) is an articulated steerable mining machine.

15. The mobile mining machine according to any one of claims 11 to 14, wherein an adjustment of relative height h between the frame of the mobile mining machine and the ground is achieved by the suspension arrangement, and wherein suspension arrangement is configured for enabling at least one of the following options: kneeling the mobile mining machine; helping in mounting/dismounting a battery; adjusting individually height of each wheel provided with the suspension arrangement; or any combination of two or more of said options.
